# FASCICULE DE BREVET EUROPEEN

(11) **EP 1 285 324 B1**
(45) Date de publication et mention de la délivrance du brevet: **20.04.2005**
(21) Numéro de dépôt: 01938329.8
(22) Date de dépôt: 23.05.2001
(51) Int. Cl.: G06F 1/00

(54) **PROCEDE DE GENERATION DE SIGNATURE ELECTRONIQUE LIEE A UN ACTE**
VERFAHREN ZUR ERZEUGUNG EINER MIT EINEM AKT VERBUNDENEN ELEKTRONISCHEN SIGNATUR
METHOD FOR GENERATING AN ELECTRONIC SIGNATURE RELATED TO A DOCUMENT

(30) Priorité: 24.05.2000 FR 0006608
(43) Date de publication de la demande: 26.02.2003
(73) Titulaire: Berthelot, Jean-Luc, 17140 Lagord (FR)
(72) Inventeur: Berthelot, Jean-Luc, 17140 Lagord (FR)
(74) Mandataire: Doireau, Marc
(86) Numéro de dépôt international: PCT/FR2001/001610
(87) Numéro de publication internationale: WO 2001/090856

(56) Documents cités:
- WO-A-96/03286

## Description

La présente invention a pour objet un procédé de validation d'une signature électronique liée à un acte et un procédé d'authentification d'une signature électronique ainsi générée liée à un acte.

Le problème est de réaliser une authentification incontestable d'un acte sous une forme électronique, s'agissant d'un acte authentique ou sous seing privé, tel qu'un testament, d'un acte judiciaire, d'un acte civil comme un vote, d'un contrat ou tout écrit. L'authentification doit permettre une vérification ultérieure de l'authenticité de la signature. L'invention s'applique en particulier à toute opération entre deux parties, contrat de société, cession, nantissement, cautionnement, opération boursière, reconnaissance de dette, actes notariés, documents d'état civil, tout engagement ou acte nécessitant un caractère authentique et original matérialisé.

A ce jour il existe de nombreux types de procédés de génération de signatures numériques. Ces procédés tendent à permettre l'authentification de l'auteur du texte transmis par un système de communication et à sécuriser l'intégrité du contenu de celui-ci par des systèmes cryptographiques. Ces systèmes consistent à effectuer un ensemble d'opérations mathématiques qui sont réalisées en fonction du texte à transmettre et de clés secrètes, individuelles et publiques, gérées par un tiers certificateur.

D'une manière générale, l'efficacité de ces systèmes est fondée sur la difficulté à inverser certaines fonctions mathématiques et à résoudre les équations d'inversion correspondantes, sans connaître les secrets de l'algorithme utilisé.

Cependant, les systèmes proposés n'assurent qu'une fonction de sécurité de transmission, la garantie d'intégrité du texte et d'identification de l'émetteur n'étant assurée que par l'intermédiaire du tiers certificateur.

Un inconvénient majeur de l'utilisation de la signature électronique des systèmes de l'état de la technique est de ne pas constituer en même temps la preuve de l'engagement de la volonté intentionnelle du signataire, au même titre qu'une signature manuscrite sur support papier qui répond à ces exigences légales en matière de preuve.

Selon une représentation sécuritaire, la signature électronique peut être assimilée à une serrure ou un verrou. La clé associée permet mais elle n'interdit pas. En détournant les données cryptographiques, par exemple par « piratage » informatique, la signature électronique est reproduite à l'identique sans trace de falsification, alors qu'une falsification de signature manuscrite doit pouvoir être détectée.

La signature manuscrite est propre à l'individu et associée à son identité. Elle ne constitue pas un code secret lié à l'individu puisqu'elle est exposée à la vue de tous, mais demeure pourtant la reconnaissance d'une responsabilité à elle seule et une preuve juridique d'engagement à un acte ou d'approbation de celui-ci. Par exemple, apposée au bas ou en marge d'un engagement, elle confère une responsabilité au regard du tiers lié à l'engagement et réciproquement entre le signataire et le tiers.

Les systèmes connus de signature numérique font appel à la cryptographie, en utilisant une clé secrète ou un code connu exclusivement du signataire du texte auquel se rattache la signature. La signature devient elle-même secrète, la responsabilité de la personne détentrice d'un code secret est accrue, et la réciprocité entre le signataire et l'acte n'existe plus.

De plus, dans ces systèmes, ni la confidentialité du texte ni son irréversibilité ne sont totalement assurées.

L'invention remédie à ces inconvénients en intégrant une approche de type signature manuscrite sur papier, c'est-à-dire sans dissocier la forme, le contenu ainsi que le support de l'acte écrit et signé lors de l'authentification, en excluant toute notion de clé ou de code détenu par le signataire ou par le tiers certificateur, de façon à permettre une authentification par le certificateur sans que celui-ci en connaisse le contenu. En utilisant une transposition dans le domaine mécanique, la signature numérisée devient une serrure auto-verrouillable.

Plus précisément, la présente invention a pour objet un procédé de validation, défini conformément à la revendication 1, qui permet à une personne disposant d'un processeur fourni par un outil informatique, tel qu'un ordinateur portable ou fixe, téléphone mobile à haut débit, organiseur électronique, etc., de conclure un acte en liaison avec des moyens de communication pour une transmission sous forme électronique.

Selon des modes particuliers de mise en oeuvre :
- les paramètres d'enregistrement d'une signature de référence sont définis par conversion des données d'identification du signataire en données géométriques déterminant, par application d'une échelle géométrique donnée, le diamètre d'une sphère de référence, et au moins trois points de base situés sur un cercle de même latitude de la sphère de référence, un marqueur temporel situé sur la sphère, localisé arbitrairement et susceptible de se déplacer à un instant donné en fonction du temps selon une loi prédéterminée, les points de base et le marqueur formant un polyèdre caractéristique d'une signature de référence ;
- les données d'identification sont constituées par un identifiant formé d'au moins une suite de chiffres arbitraire, mais dépendant univoquement du signataire, et/ou de données biométriques relatives à cette personne;
- des coefficients d'adaptation peuvent être appliqués aux points de base afin de respecter des tolérances minimale et maximale de lisibilité de position de ces points ;
- les paramètres d'enregistrement d'un acte en liaison avec une signature électronique sont définis par une table de correspondance, appelée premier témoin, qui adresse les données de caractères et codes de service du texte de l'acte et les convertit en données volumiques élémentaires, puis par identification de la somme de ces données au volume d'un polyèdre après avoir défini les coordonnées du marqueur temporel, par indexation homogène du texte par positionnement des données volumiques dans le polyèdre et par l'établissement d'une table de correspondance, deuxième témoin, qui en résulte ;
- l'indexation du texte est avantageusement effectuée par détermination des coordonnées sphériques de points à partir des valeurs de chaque caractère ou code adressé ;
- le deuxième témoin peut faire intervenir le centre et un sommet de la sphère de référence ;
- la cohérence de l'indexation peut être contrôlée en vérifiant que trois points d'indexation sur les arêtes du polyèdre sont confondus au sommet de la sphère ;
- les figures géométriques comportant une structure polyédrique et une sphère peuvent être reconstituées et visualisées par l'intermédiaire d'un traitement tridimensionnel ou par un dispositif de projection 3D, par exemple de type holographique ou autre.

L'invention se rapporte également à un protocole d'authentification d'un acte auprès d'un certificateur. Ce protocole consiste à effectuer auprès de ce certificateur l'enregistrement d'une signature électronique de référence, la transmission des paramètres d'un acte lié à cette signature en fonction de celle-ci, à définir des conditions de lisibilité du texte selon un format géométrique adapté, avantageusement verrouillé par un contrôle de cohérence d'indexation, et à vérifier l'identité entre les données géométriques de la signature de référence et de la signature liée à l'acte.

En particulier, la lisibilité de l'acte par le destinataire n'étant pas liée à l'authentification, elle peut être autorisée par le signataire une fois la garantie d'intégrité vérifiée par la transmission des informations spécifiques de correspondance définies par les témoins.

Avantageusement, l'invention garantit l'identification du signataire et la fiabilité de celle-ci par l'introduction de paramètres caractéristiques et de tolérances, la preuve de la volonté d'engagement du signataire, l'intégrité par la liaison entre la signature et l'acte, la confidentialité de l'acte par la reconnaissance de la signature sans connaissance du contenu de l'acte, et l'irréversibilité de l'acte par l'introduction d'une dimension temporelle. Le certificateur peut ainsi adresser aux contractants une garantie d'authentification fondée sur une sécurité réelle et totale.

D'autres caractéristiques et avantages de l'invention apparaîtront à la lecture qui suit, se rapportant à un exemple détaillé non limitatif de mise en oeuvre, tel qu'illustré par les figures annexées qui représentent, respectivement :
- la figure 1, un exemple de conversion tridimensionnelle d'une signature de référence ;
- la figure 2, un diagramme d'enregistrement des paramètres d'une signature de référence ;
- la figure 3, un exemple de conversion tridimensionnelle d'un acte lié à une signature électronique;
- la figure 4, un diagramme d'enregistrement des paramètres d'un acte lié à une signature; et
- la figure 5, un protocole d'authentification d'une signature liée à un acte.

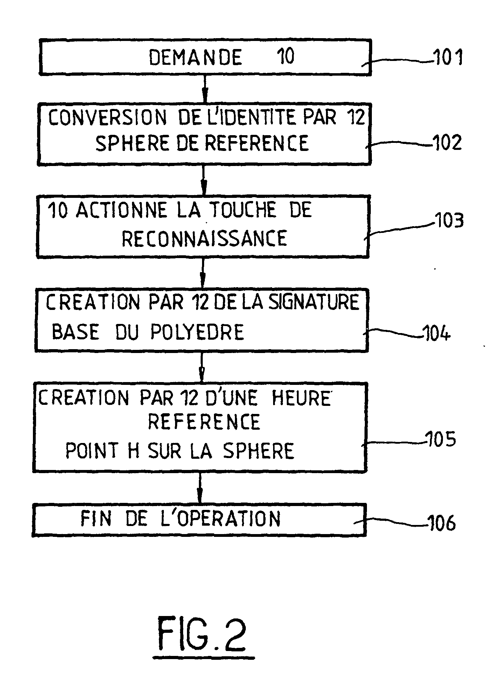

Une signature de référence est enregistrée dans un centre certificateur disposant de moyens de mémorisation par conversion de données d'identification dans un espace tridimensionnel par des moyens de traitement appropriés d'un outil informatique, connus de l'homme du métier. Les données d'identification sont fournies par un dispositif de reconnaissance en particulier biométrique, par exemple une empreinte de doigt ou de l'iris, des fréquences vocales, etc., et/ou de reconnaissance de données. Alternativement ou en combinaison, ces données sont propres au signataire mais arbitraires dans leurs valeurs, par exemple un numéro d'identité, de sécurité sociale ou d'autres caractéristiques (date de naissance, nom et prénom, etc.). Un exemple de données combinant des données d'identité et des données biométriques est utilisé en référence à la figure 2.

Un identifiant est alors évalué à partir de ces données d'identification sous la forme d'une suite arbitraire de caractères dépendant univoquement du signataire, par exemple une suite de chiffres obtenus directement ou par application d'une formule de transformation.

L'ensemble des chiffres de l'identifiant est converti, à l'aide d'un mode d'adressage dans le circuit de traitement, en données géométriques dans un espace tridimensionnel normé en coordonnées sphériques de centre O définissant une échelle de grandeur géométrique. Le centre certificateur dispose d'une unité informatique équipée d'une horloge interne, capable de calculer ces données géométriques et de les visualiser à l'aide d'un logiciel tridimensionnel selon l'échelle de grandeur souhaité.

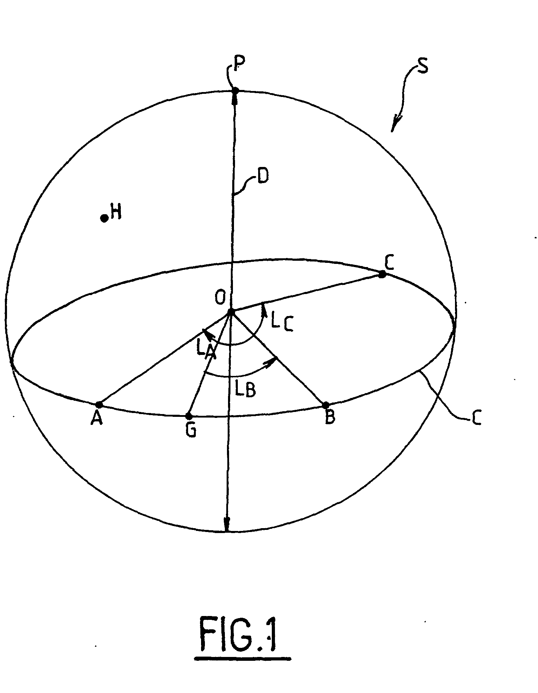

Dans l'exemple de réalisation illustré en figure 1, quatre données géométriques sont fournies : une valeur de diamètre D d'une sphère de référence S centrée en O, et les angles de longitude, L_{A}, L_{B} et L_{C} de trois points A, B et C coplanaires disposés, pour simplifier, sur le cercle C0 de latitude nulle (équateur d'angle de colatitude nul). Les longitudes sont mesurées par rapport à un rayon d'origine OG. Les quatre valeurs D, L_{A}, L_{B} et L_{C} constituent les paramètres de la signature de référence se rapportant à l'échelle de valeur géométrique considérée.

Les segments AB, BC, et CA définissent la base invariable d'une structure polyédrique matérialisant la signature. Cette structure est définie par les trois points de base A, B, C et par un 4^{ème} point H, disposé arbitrairement sur la sphère S et formant le sommet du tétraèdre ABCH. Le point H se déplacera ultérieurement à partir de l'enregistrement du texte validé dans une mémoire, selon une loi spatio-temporelle prédéterminée pour servir de marqueur temporel. Ce marqueur détermine une heure de référence universelle, par exemple l'heure de Greenwich et se déplace en fonction de l'horloge interne de l'unité.

Afin de permettre une lisibilité suffisante de la représentation, des bornes de tolérance supérieure et inférieure sont définies pour définir un intervalle de tolérance. Dans le cas où la somme des angles de longitude L_{A}, L_{B} et L_{C} se situe en dehors de l'intervalle de tolérance, des coefficients modérateur ou amplificateur sont appliqués.

L'exemple de diagramme de la suite des opérations d'enregistrement des paramètres d'une signature de référence illustré en figure 2, concerne le cas d'une personne 10 qui enregistre sa signature auprès d'un centre certificateur 12. La personne dispose d'un téléphone muni éventuellement d'un dispositif de reconnaissance biométrique, par exemple de reconnaissance d'empreinte digitale, comme outil de communication en liaison avec le centre 12. Avantageusement, ce centre certificateur est investi d'une autorité garante de l'authentification et de la sécurité des échanges via un système de communication, par exemple le réseau internet, est chargé de délivrer les certificats d'authentification pour des écrits électroniques et garantit l'archivage des actes.

A l'étape 101, après les vérifications d'identité d'usage, la personne 10 adresse au centre 12 une demande dépôt de signature.

A l'étape 102, le centre 12 convertit des données d'identité et/ou autres caractéristiques d'enregistrement selon un mode de conversion propre à son service en une sphère de référence S dont le diamètre correspond, par conversion, à l'identité de la personne.

A l'étape 103, la personne 10 actionne le dispositif de reconnaissance ou tout numéro personnel, par exemple l'équivalent d'une adresse électronique; un numéro identifiant la reconnaissance, appelé identifiant, est ainsi adressé au centre ;

A l'étape 104, le centre positionne les trois points A, B, C constituant la base de la structure polyédrique sur l'équateur de la sphère dont les paramètres sont définis par la conversion de l'identifiant.

A l'étape 105, le centre positionne le 4^{ème} point sur la sphère dont les coordonnées sont définies aléatoirement. Ce point détermine l'heure de référence et se déplace en fonction d'une horloge interne à partir de l'enregistrement.

A l'étape 106, le centre certificateur peut désormais authentifier un acte.

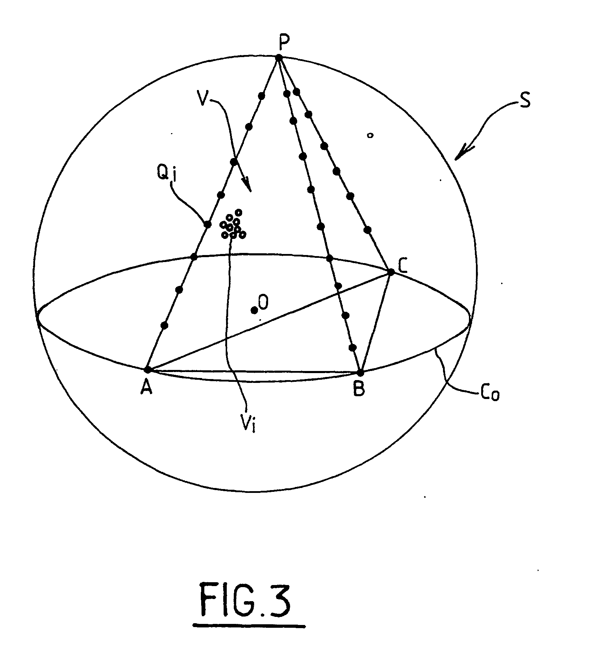

Afin de permettre l'authentification d'un acte, l'invention prévoit d'abord de définir les paramètres d'enregistrement d'un acte lié à une signature électronique par conversion tridimensionnelle, comme illustrée en figure 3.

Pour ce faire, un premier témoin, sous la forme d'une table de correspondance T1, adresse les données de caractères et codes de service « x » du texte de l'acte et les convertit en volumes élémentaires Vi.

Les volumes Vi sont calibrés à l'échelle de grandeur utilisée ci-dessus pour que la somme de ces volumes élémentaires représente le volume V du tétraèdre ABCP de la signature de référence, ayant pour sommet le point P (pôle Nord) de la sphère S. P a pour coordonnées sphériques :
module = D/2 ; longitude = 0° ; latitude = 90°. [à l'instant de la transmission du texte de l'acte. Le marqueur H est déterminé en position par ses coordonnées sphériques à cet instant.]

Les caractères et codes « x » sont indexés par positionnement des volumes élémentaires Vi en un nombre correspondant de points Qi du tétraèdre ABCP. Les coordonnées des points Qi sont déterminées par répartition homogène sur et/ou dans le tétraèdre, en fonction du nombre de points Qi à déterminer: sur les arêtes AP, BP et CP, puis sur les faces APB, BPC, CPA, et enfin dans le volume V du tétraèdre. Dans l'exemple illustré, une décomposition sur les arêtes est effectuée.

Une table de correspondance T2, servant de deuxième témoin, est établie entre les quantités OPQi et les valeurs de volume élémentaire Vi des caractères ou codes « x ». Afin de verrouiller la prise en compte des coordonnées sphériques des points Qi, il est vérifié que la position du point P correspond aux coordonnées sphériques de trois points Qi.

Ainsi, une structure tétraédrique est matérialisée par une base ABC de sphère de référence ayant un sommet P et pour segments uniques PAH(t), PBH(t), PCH(t) à tout instant t. Chaque caractère est matérialisé par un point Qi unique dont la relation OPQiH(t) est unique et immuable.

Les conditions de lecture du texte de l'acte sont vérifiées à partir d'une sphère de diamètre aléatoire D', par positionnement de points Q'i de coordonnées sphériques fournies par le deuxième témoin, le point P' étant défini par trois points Q'i de mêmes coordonnées.. Les quantités OP'Q'i et OPQi sont comparées : en cas d'identité dans un intervalle de tolérance prédéfini, le texte est considéré comme lisible. La lecture du texte peut être autorisée selon la table T1 de premier témoin. Sinon, le texte est considéré comme interdit de lecture car certainement modifié.

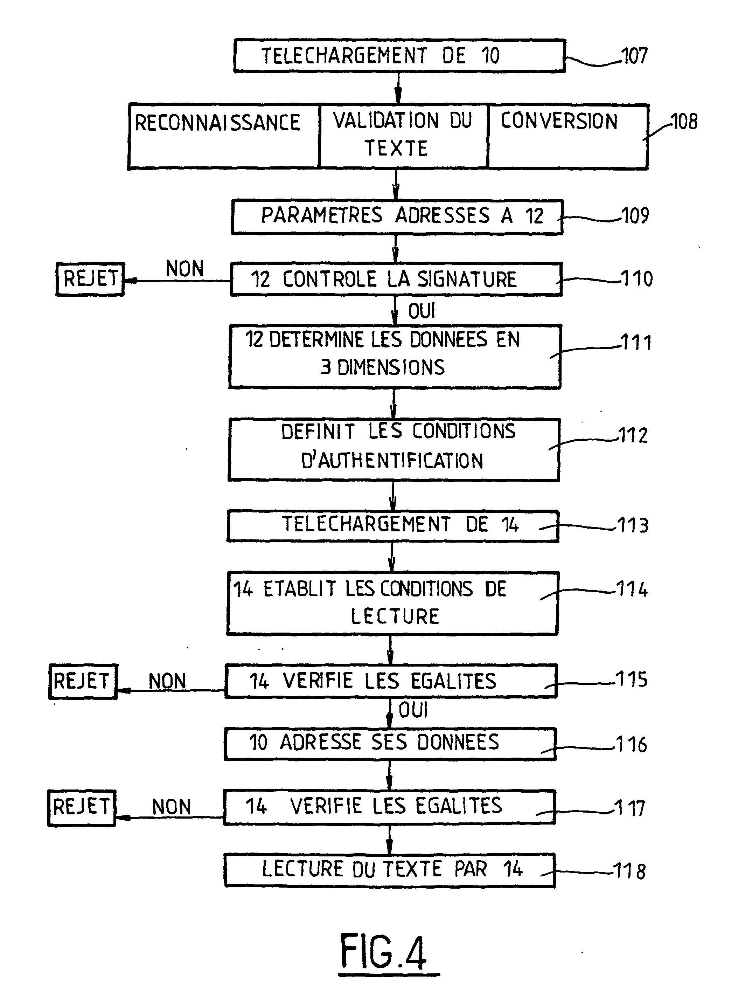

Le diagramme de la figure 4 illustre l'enchaînement des opérations d'enregistrement des paramètres d'un acte commercial entre la personne 10 et un distributeur 14 du réseau internet, auprès du centre certificateur 12.

Ces opérations se déroulent en mettant en oeuvre l'enregistrement des paramètres prévus en référence à la figure 3, en deux phases : une première phase concerne la génération de la signature liée à un acte, suivant les étapes 107 à 111, et une deuxième phase établit les conditions de lecture aux fins d'authentification, suivant les étapes 112 à 118.

A l'étape 107, après vérification du texte adressé par le distributeur et sur lequel le signataire 10 doit s'engager, ce dernier demande au centre agréé 12 dépositaire de sa signature de référence, le téléchargement du premier témoin de conversion tridimensionnelle, à savoir la table de correspondance T1.

A l'étape 108, le signataire 10 valide son texte par le système de reconnaissance biométrique et/ou par tout numéro identifiant concerné, et saisit simultanément le résultat obtenu de la reconnaissance et chaque caractère et code de mise en forme du texte en données volumétriques, comme indiqué plus haut. Cette opération permet de lier l'acte aux données d'identification et détermine la volonté d'engagement à l'acte par le signataire.

A l'étape 109, les paramètres relatifs au texte de l'acte après conversion sont adressés au centre 12.

A l'étape 110, le centre contrôle la validité de la signature tridimensionnelle correspondant à l'acte : c'est la garantie d'identification. Cette identification s'effectue indépendamment de la lecture de l'acte : c'est la garantie de confidentialité.

A l'étape 111, si le contrôle est satisfaisant, le centre effectue l'authentification de l'acte par la matérialisation du tétraèdre de l'acte dont le volume est défini par le texte et sa base par les paramètres d'identification : la signature électronique liée à l'acte est constituée.

La deuxième phase établit les conditions d'authentification et de lecture.

A l'étape 112, le centre 12 définit les conditions d'authentification par les coordonnées sphériques des points Qi du tétraèdre et par la vérification de la superposition au sommet P de trois points Qi. Les relations OPQiH(t) sont constituées.

A l'étape 113, la table de correspondance entre chaque quantité OPQi et le volume élémentaire Vi du caractère ou code, qui constitue le deuxième témoin, est adressée au distributeur 14. Des moyens de traitement sont également transmis.

A l'étape 114, le distributeur établit les conditions de lecture du texte par l'indexation du texte selon la condition d'intégrité et d'irréversibilité entre les quantités OP'Q'i et OPQi; toute égalité non constatée entraîne le refus du texte.

A l'étape 115, la table T1, premier témoin, est vérifiée par l'identité entre le volume V du tétraèdre et la somme des volumes élémentaires Vi. Si les égalités sont constatées, le texte peut être lu selon la correspondance entre OP'Q'i et Vi.

A l'étape 116, le signataire 10 adresse au distributeur 14 la table de correspondance du texte, c'est-à-dire le deuxième témoin.

Après vérification de la table par l'égalité entre le volume V' et la somme des volumes élémentaires V'i à l'étape 117, le distributeur peut lire son texte (étape 118).

L'authentification d'une signature liée à un acte est basée sur la vérification de l'égalité entre les relations OP'Q'iH(t) et OPQiH(t). Il convient de noter que, les relations OPQiH(t) étant uniques et immuables, toute modification de l'une de ses variables et composants modifie la relation :
- si l'égalité est respectée, le texte validé est l'acte original et celui-ci sont reconnu comme authentique : le certificat d'authenticité est délivré ;
- si l'égalité n'est pas respectée, la garantie d'intégrité et d'irréversibilité n'est pas assurée : l'acte est rejeté.

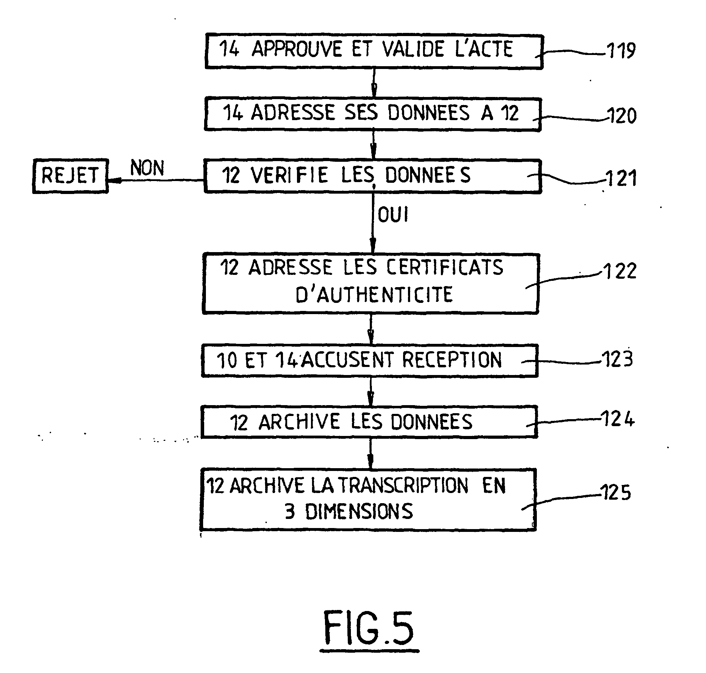

La mise en oeuvre des conditions d'authentification et de garantie d'intégrité de l'acte est exemplifiée par le protocole de la figure 5.

A l'étape 119, le distributeur 14 approuve et valide l'acte et la signature du signataire 10 liée à celui-ci.

En 120, le distributeur 14 adresse au centre certificateur 12 son approbation par la transmission des relations OP'Q'i et D'.

Le centre vérifie l'égalité entre les relations OP'Q'iH(t) et OPQiH(t) à l'étape 121. Si l'égalité est constatée entre toutes les relations, l'acte est authentique. Le centre adresse alors au signataire et au distributeur les certificats d'authenticité spécifiant les échanges (étape122).

Le signataire et le distributeur accusent réception (étape 123) et le centre archive les échanges et ses données (étape 124).

A l'étape 125, le centre archive également les données sphériques relatives à l'acte et à sa signature, ainsi que la transcription de la structure polyédrique unique en trois dimensions matérialisant l'acte authentique.

L'invention n'est pas limitée aux exemples décrits et représentés. Par exemple, une ou plusieurs autres signatures peuvent être liées par multiple de trois points supplémentaires formant une structure de base, permettant à au moins deux parties contractantes de signer. D'autres paramètres peuvent être utilisés pour la représentation tridimensionnelle : une sphère de référence propre à chaque signature non seulement définie par son diamètre, mais également par son centre et par la position de son sommet. Les points de base peuvent être situés sur un plan de latitude non nulle, perpendiculaire à l'axe principal de la sphère passant par son centre et son sommet.

## Revendications

1. Procédé de génération d'une signature électronique d'une personne disposant d'un outil informatique pour conclure un acte dont le texte est écrit sous une forme électronique et transmis par voie de communication à un autre outil, **caractérisé en ce qu'**il consiste à fournir dans une mémoire des valeurs de paramètres d'enregistrement d'une signature de référence qui caractérisent un objet de référence en représentation tridimensionnelle en fonction de données d'identification sous forme de données de reconnaissance et/ou d'un identifiant, et à convertir par un circuit de traitement, lors de la validation de la signature, chaque caractère et code de service qui forment l'ensemble du texte de l'acte attaché à la signature, en volumes élémentaires définissant le volume de l'objet représentatif de la signature de référence.

2. Procédé de génération selon la revendication 1, dans lequel les paramètres d'enregistrement de la signature de référence sont définis par conversion des données d'identification du signataire en données géométriques déterminant, par application d'une échelle géométrique donnée, le diamètre (D) d'une sphère de référence (S), au moins trois points de base (A, B, C) situés sur un cercle (C0) de même latitude de la sphère de référence (S), un marqueur temporel (H(t)) situé sur la sphère, localisé arbitrairement et susceptible de se déplacer à un instant donné d'enregistrement de l'acte en fonction du temps selon une loi prédéterminée, les points de base et le marqueur formant un polyèdre caractéristique de la signature de référence.

3. Procédé de génération selon la revendication précédente, dans lequel les données d'identification sont constituées par un identifiant formé d'au moins une suite de chiffres arbitraire, dépendant univoquement du signataire et/ou de données biométriques relatives à cette personne.

4. Procédé de génération selon la revendication 2, dans lequel des coefficients d'adaptation peuvent être appliqués aux points de base (A, B, C) afin de respecter des tolérances minimale et maximale de lisibilité de position de ces points.

5. Procédé de génération selon la revendication 2, dans lequel les paramètres d'enregistrement d'un acte en liaison avec une signature électronique sont définis par une table de correspondance, premier témoin, qui adresse les données de caractères et codes de service du texte de l'acte et les convertit en données volumiques élémentaires, puis par identification de la somme de ces données à la donnée volumique du polyèdre de référence après avoir défini les coordonnées du marqueur temporel, par indexation homogène du texte par positionnement des données volumiques dans le polyèdre et par l'établissement d'une table de correspondance, deuxième témoin, qui en résulte.

6. Procédé de génération selon la revendication précédente, dans lequel l'indexation homogène du texte est effectuée par détermination des coordonnées sphériques de points (Qi) à partir des valeurs (x) de chaque caractère ou code adressé.

7. Procédé de génération selon la revendication précédente, dans lequel le deuxième témoin fait intervenir le centre (O) et un sommet (P) de la sphère de référence (S).

8. Procédé de génération selon l'une quelconque des revendications précédentes, dans lequel la cohérence des conversions est contrôlée en vérifiant que trois points d'indexation (Qi) sur les arêtes (PA, PB, PC) du polyèdre sont confondus au sommet de la sphère (P).

9. Procédé de génération selon l'une quelconque des revendications précédentes, dans lequel au moins deux signatures peuvent être liées à un même acte.

10. Procédé d'authentification d'un acte auprès d'un certificateur, **caractérisé en ce qu'**il consiste à effectuer auprès de ce certificateur l'enregistrement d'une signature électronique de référence telle que définie dans l'une quelconque des revendications précédentes et la transmission des paramètres d'un acte lié à cette signature par conversion de chacun de ses caractéres et codes de service selon l'une des revendications 1 ou 5, à définir des conditions de lisibilité du texte selon un format géométrique adapté, verrouillé par un contrôle de cohérence d'indexation, et à vérifier l'identité entre les données géométriques de la signature de référence et de la signature liée à l'acte.

11. Procédé d'authentification selon la revendication 10, dans lequel l'identification, l'authentification et l'archivage sous une forme tridimensionnelle sont assurés par un centre certificateur (12).

12. Procédé d'authentification selon les revendications 10 ou 11, dans lequel le centre certificateur (12) définit les paramètres d'une sphère référence (S) dont la valeur est déterminée par la conversion des données de l'identité du signataire (10) et attribue le marqueur temporel (H(t)) sur la sphère référence (S) fixant ainsi des paramètres irréversibles.

13. Procédé selon l'une quelconque des revendications 10 à 12, dans lequel les opérations s'effectuent sans la connaissance du contenu de l'acte par le centre certificateur.

## Patentansprüche

1. Verfahren zur Erzeugung einer elektronischen Signatur einer Person, die über eine Datenverarbeitungsanlage verfügt, um einem Dokument Gültigkeit zu verleihen, dessen Text in elektronischer Form geschrieben und über eine Kommunikation an eine andere Datenverarbeitungsanlage gesendet wird, **dadurch gekennzeichnet, dass** es darin besteht, in einem Speicher Werte von Registrierungsparametern einer Referenzsignatur bereitzustellen, die ein Referenzobjekt in dreidimensioneller Darstellung als Funktion von Identifizierungsdaten in Form von Erkennungsdaten und/oder einer Kennung kennzeichnen, und darin besteht, bei der Validierung der Signatur jedes Schriftzeichen und jeden Servicecode, die die Gesamtheit des Textes des an die Signatur angehängten Dokuments bilden, durch eine Verarbeitungsschaltung in Elementarvolumina umzuwandeln, die das Volumen des Objekts definieren, das die Referenzsignatur repräsentiert.

2. Verfahren nach Anspruch 1, in dem die Registrierungsparameter der Referenzsignatur durch Umwandlung der Identifizierungsdaten des Unterzeichners in geometrische Daten definiert werden, die durch Verwenden eines gegebenen geometrischen Maßstabes den Durchmesser (D) einer Referenzkugel (S), wenigstens drei Basispunkte (A, B, C), die sich auf einem Kreis (CO) der gleichen Breite der Referenzkugel (S) befinden, eine Zeitmarkierung (H(t)), die sich an einer beliebigen Stelle auf der Kugel befindet und dazu geeignet ist, sich ab einem gegebenen Registrierungszeitpunkt des Dokuments entsprechend einer vorbestimmten Gesetzmäßigkeit als Funktion der Zeit zu verschieben, bestimmen, wobei die Basispunkte und die Markierung einen Polyeder bilden, der für die Referenzsignatur charakteristisch ist.

3. Verfahren nach dem vorherigen Anspruch, in dem die Identifizierungsdaten durch eine Kennung gebildet sind, die aus wenigstens einer Folge von beliebigen Ziffern, die eindeutig von dem Unterzeichner abhängig sind, und/oder von biometrischen Daten, die diese Person betreffen, gebildet ist.

4. Verfahren nach Anspruch 2, in dem Anpassungskoeffizienten auf die Basispunkte (A, B, C) angewendet werden könne, um minimale und maximale Lesbarkeitstoleranzen der Position dieser Punkte einzuhalten.

5. Verfahren nach Anspruch 2, in dem die Registrierungsparameter eines Dokuments in Verbindung mit einer elektronischen Signatur durch eine Korrespondenztabelle, erste Kontrolle, die die Zeichen- und Servicecodes des Textes der Dokument adressiert und sie in Daten von Elementarvolumina umwandelt, dann durch Identifizierung der Summe dieser Daten mit den Volumendaten des Referenzpolyeders, nachdem die Koordinaten der Zeitmarkierung definiert wurden, durch gleichmäßige Indizierung des Textes durch Positionierung des Volumendaten in dem Polyeder und durch Erstellen einer Korrespondenztabelle, zweite Kontrolle, die daraus resultiert, definiert werden.

6. Verfahren nach dem vorherigen Anspruch, in dem die gleichmäßige Indizierung des Textes durch Bestimmen der Kugelkoordinaten von Punkten (Qi) aus Werten (x) jedes adressierten Zeichens oder Codes durchgeführt wird.

7. Verfahren nach dem vorherigen Anspruch, in dem die zweite Kontrolle das Zentrum (O) und eine Spitze (P) der Referenzkugel (S) berücksichtigt.

8. Verfahren nach einem der vorherigen Ansprüche, in dem die Übereinstimmung der Umwandlungen kontrolliert wird, indem überprüft wird, dass drei Indizierungspunkte (Qi) auf den Kanten (PA, PB, PC) des Polyeders mit der Spitze (P) der Kugel zusammenfallen.

9. Verfahren nach einem der vorherigen Ansprüche, in dem wenigstens zwei Signaturen mit einem selben Dokument verbunden werden können.

10. Authentifizierungsverahren eines Dokuments bei einem Zertifikator, **dadurch gekennzeichnet, dass** es darin besteht, dass die Registrierung einer elektronischen Referenzsignatur wie sie in einem der vorherigen Ansprüche definiert ist und die Übertragung der Parameter eines Dokuments, das mit dieser Signatur verbunden ist, durch Umwandlung jedes seiner Zeichen und Servicecodes gemäß einem der Ansprüche 1 bis 5, bei dem Zertifikator vorgenommen wird, dass Bedingungen für die Lesbarkeit des Texts gemäß einem angepassten geometrischen Format, das durch eine Kontrolle der Indexierungsübereinstimmung gesichert wird, definiert sind und dass die Identität zwischen den geometrischen Daten der Referenzsignatur und der mit dem Dokument verbundenen Signatur überprüft wird.

11. Authentifizierungsverfahren nach Anspruch 10, in dem die Identifizierung, die Authentifizierung und die Archivierung in dreidimensionaler Form durch ein Zertifizierungszentrum (12) gewährleistet sind.

12. Authentifizierungsverfahren nach Anspruch 10 oder 11, in dem das Zertifizierungszentrum (12) die Parameter einer Referenzkugel (S), deren Wert durch die Umwandlung der Daten der Identität des Unterzeichners (10) bestimmt ist, definiert und die Zeitmarkierung (H(t)) auf der Referenzkugel (S) anordnen, wodurch irreversible Parameter festgelegt sind.

13. Verfahren nach einem der Ansprüche 10 bis 12, in dem die Operationen ohne Kenntnis des Inhalts des Dokuments durch das Zertifizierungszentrum erfolgen.

## Claims

1. A process for generating an electronic signature of a person having a data-processing tool at his/her disposal for concluding a deed, the text of which is written in an electronic form and transmitted to another tool by means of a communication channel, **characterised in that** said process consists in supplying values of parameters of recording a reference signature to a memory that characterise a reference object in three-dimensional representation as a function of identification data in the form of recognition data and/or in the form of an identifier, and in converting by means of a processing circuit, at the time of validation of the signature, each character and function code which constitute the totality of the text of the deed attached to the signature into elementary volumes defining the volume of the object that is representative of the reference signature.

2. Process of generation according to Claim 1, in which the parameters of recording the reference signature are defined by conversion of the identification data of the signatory into geometric data which determine, by application of a given geometric scale, the diameter (D) of a reference sphere (S), at least three base points (A, B, C) situated on a circle (C₀) of the same latitude pertaining to the reference sphere (S), a temporal marker (H(t)) situated on the sphere, located arbitrarily and capable of being displaced at a given moment of recording the deed as a function of time in accordance with a predetermined rule, the base points of the marker forming a polyhedron which is characteristic of the reference signature.

3. Process of generation according to the preceding claim, in which the identification data are constituted by an identifier formed from at least one arbitrary sequence of digits depending univocally on the signatory and/or on biometric data relating to this person.

4. Process of generation according to Claim 2, in which adaptation coefficients may be applied to the base points (A, B, C) in order to comply with minimal and maximal tolerances of readability of the position of these points.

5. Process of generation according to Claim 2, in which the parameters of recording a deed coupled with an electronic signature are defined by a correspondence table, a first reference, which addresses the data of characters and function codes of the text of the deed and converts them into elementary volume data, then by identification of the sum of these data with the volume datum of the reference polyhedron after defining the coordinates of the temporal marker by homogeneous indexing of the text by positioning the volume data in the polyhedron and by the establishment of a correspondence table, a second reference, resulting therefrom.

6. Process of generation according to the preceding claim, in which the homogeneous indexing of the text is carried out by determination of the spherical coordinates of points (Qᵢ) from the values (x) of each character or code addressed.

7. Process of generation according to the preceding claim, in which the second reference causes the centre (O) and a vertex (P) of the reference sphere (S) to play an active part.

8. Process of generation according to any one of the preceding claims, in which the coherence of the conversions is checked by verifying that the indexing points (Qᵢ) on the edges (PA, PB, PC) of the polyhedron are merged at the vertex of the sphere (P).

9. Process of generation according to any one of the preceding claims, in which at least two signatures may be linked to one and the same deed.

10. A process for authenticating a deed in the opinion of a certifier, **characterised in that** it consists in carrying out, in the presence of this certifier, the recording of a reference electronic signature as defined in any one of the preceding claims and the transmission of the parameters of a deed linked to this signature by conversion of each of its characters and function codes in accordance with one of Claims 1 or 5, in defining conditions of readability of the text in accordance with an adapted geometric format, locked by a check of coherence of indexing, and in verifying the identity amongst the geometric data of the reference signature and of the signature linked to the deed.

11. Process of authentication according to Claim 10, in which identification, authentication and storage in a three-dimensional form are ensured by a certifying centre (12).

12. Process of authentication according to Claim 10 or 11, in which the certifying centre (12) defines the parameters of a reference sphere (S), the values of which are determined by the conversion of the data of the identity of the signatory (10), and assigns the temporal marker (H(t)) to the reference sphere (S), thus setting irreversible parameters.

13. Process according to any one of Claims 10 to 12, in which the operations are carried out without knowledge of the contents of the deed by the certifying centre.
